# NOUVEAU FASCICULE DE BREVET EUROPEEN

(11) **EP 2 867 382 B2**
(45) Date de publication et mention de la décision concernant l'opposition: **13.07.2022**
(45) Mention de la délivrance du brevet: 18.07.2018
(21) Numéro de dépôt: 13734028.7
(22) Date de dépôt: 28.06.2013
(51) Int. Cl.: C23C 4/08, C23C 4/18, C23C 28/00, F16L 58/10

(54) **REVÊTEMENT EXTÉRIEUR POUR ÉLÉMENT DE TUYAUTERIE ENTERRÉ À BASE DE FER, ÉLÉMENT DE TUYAUTERIE REVÊTU ET PROCÉDÉ DE DÉPÔT DU REVÊTEMENT**
AUSSENBELAG FÜR EIN UNTERIRDISCHES ROHRLEITUNGSELEMENT AUS EISEN, BESCHICHTETES ROHRLEITUNGSELEMENT UND VERFAHREN ZUM AUFBRINGEN DER BESCHICHTUNG
OUTER COATING FOR AN UNDERGROUND PIPING MEMBER MADE FROM IRON, COATED PIPING MEMBER AND METHOD FOR DEPOSITING THE COATING

(30) Priorité: 29.06.2012 FR 1256268
(43) Date de publication de la demande: 06.05.2015
(73) Titulaire: Saint-Gobain Pam Canalisation, 54700 Pont-à-Mousson (FR)
(72) Inventeur: BONDIL, Olivier, F-54700 Pont-à-Mousson (FR); NOUAIL, Gérard, F-57000 Metz (FR); PEDEUTOUR, Jean-Marc, F-54700 Blénod-lès-Pont-à-Mousson (FR)
(74) Mandataire: Lavoix
(86) Numéro de dépôt international: PCT/EP2013/063717
(87) Numéro de publication internationale: WO 2014/001544

(56) Documents cités:
- EP-A1- 0 771 885
- EP-A2- 1 473 149
- WO-A1-94/19640
- IN-A- 242 339
- JP-A- 63 265 627
- JP-A- H10 264 301
- JP-A- H11 351 492
- JP-A- 2003 293 165
- JP-A- 2004 223 429
- JP-A- 2005 349 817

## Description

La présente invention concerne un revêtement extérieur du type pour élément de tuyauterie enterré et à base de fer, notamment en fonte, le revêtement extérieur comprenant une première couche poreuse et une seconde couche poreuse disposée sur la première couche et apte à boucher des pores de la première couche.

L'invention concerne également un élément de tuyauterie revêtu de ce revêtement extérieur, ainsi qu'un procédé de dépôt du revêtement sur l'élément de tuyauterie.

Par "éléments de tuyauterie", on entend les tuyaux, ainsi que les divers accessoires tels que les coudes, les raccords, etc., utilisés par exemple dans le domaine de l'adduction d'eau.

Par le document JP-A-23010357, on connaît un procédé de fabrication de revêtement de tube d'acier. Ce document envisage un dépôt par pulvérisation d'un alliage zinc/ aluminium sacrificiel, suivi du dépôt d'une résine époxy. Il semble que la couche de résine doive être étanche. Ce procédé s'applique aux revêtements de tubes d'un "espace de séchage", et donc certainement de tubes aériens, constitués de fer ou d'acier.

La corrosion par les sols des métaux ferreux est un phénomène d'une nature différente de la corrosion atmosphérique et consiste, pour l'essentiel, en la création de zones d'oxydation électriquement associées à des zones de réduction pouvant être situées à une certaine distance. En conséquence, il se produit des détériorations localisées et par conséquent importantes du métal ferreux.

La protection anticorrosion des éléments de tuyauterie enterrés présente ainsi une difficulté particulière, d'autant plus que les terrains sont hétérogènes et de natures très diverses, que les éléments de tuyauterie, suivant leur utilisation, véhiculent des fluides à des températures différentes, modifiant les conditions de corrosion, et que la manutention des éléments de tuyauteries destinées à être enterrées conduit fréquemment à blesser en divers emplacements leur surface extérieure.

Le document EP-A-0 686 246 décrit un élément de tuyauterie en fonte ductile comportant un revêtement comprenant une première couche métallisée poreuse et une seconde couche de peinture assurant un effet « bouche-pores ». Ce revêtement assure une protection efficace et durable de la tuyauterie contre la corrosion, une fois celle-ci enterrée. Toutefois, les aspects sanitaires et environnementaux de ce revêtement ne correspondent plus aux exigences renforcées actuelles.

Un but de l'invention est de fournir un revêtement assurant une protection anticorrosion encore plus efficace de l'élément de tuyauterie, en particulier en sol corrosif, avec un coût compétitif et des propriétés sanitaires et environnementales améliorées.

A cet effet, l'invention a pour objet un revêtement extérieur selon la revendication 1.

Selon des modes particuliers de réalisation, le revêtement extérieur peut comprendre l'une ou plusieurs des caractéristiques suivantes, prise(s) isolément ou selon toutes les combinaisons techniquement possibles :
ladite au moins résine de synthèse est formulée à partir d'au moins un polymère ou au moins un copolymère pris dans la liste consistant en les polymères ou copolymères acrylique, styrène acrylique, halogénures de vinyle tels que chlorure de vinyle, chlorure de vinyle acrylate, halogénures de vinylidène tels que chlorure de vinylidène, vinyliques, méthacrylique, acétate polyvinylique, et leurs mélanges ;
la première couche présente une densité surfacique d'au moins 200 g/m<2>, de préférence au moins 350 g/m<2> ;
la seconde couche est dépourvue de solvant ou de co-solvant organiques, notamment de solvant ou de co-solvant dérivés des hydrocarbures, et dépourvue de bisphénol ;
la seconde couche comprend un ou plusieurs principes actifs aptes à entrer en contact avec des eaux destinées à la consommation humaine et à avoir une action bactéricide et/ou passivante ;
la seconde couche présente une densité surfacique à sec comprise entre 120 g/m<2> et 350 g/m<2> ;
la première couche est déposée par projection thermique, de préférence par arc électrique ;
la peinture contient, en masse, entre 20% et 60 %, de préférence entre 30% et 50 %, d'eau, entre 20% et 70 %, de préférence entre 25% et 45%, d'au moins une résine de synthèse, et entre 1% et 30% d'au moins un pigment/colorant organique ou minéral ;
ledit au moins un pigment/colorant organique ou minéral est pris dans la liste consistant en un oxyde métallique tel que l'oxyde de fer, l'oxyde de titane, l'oxyde de chrome, ou en le noir de carbone, la phtalocyanine de cuivre, et leurs mélanges ;
la peinture contient, en masse, entre 1% et 10 % d'au moins un pigment anticorrosion ;
ledit au moins un pigment anticorrosion est pris parmi dans la liste consistant en le phosphate de zinc, l'oxyde de zinc, l'oxyde de zinc modifié, et leurs mélanges ;
la peinture contient, en masse, entre 10% et 40 % d'au moins une charge prise dans la liste consistant en le sulfate de baryte, le carbonate de calcium, le talc, le mica, les silicates, la silice, le kaolin, la dolomie, et leurs mélanges ; et
la peinture contient, en masse, entre 0,1% et 5 % d'au moins un additif pour peinture pris dans la liste consistant en les agents épaississant, passivants, biocides, bactéricides, mouillants, dispersants, anticorrosion, anti-mousse, émulsifiants, de tension, et leurs mélanges.

L'invention concerne aussi un élément de tuyauterie revêtu, à base de fer, notamment en fonte, destiné à être enterré, comprenant un revêtement extérieur tel que décrit ci-dessus.

L'invention concerne enfin un procédé de dépôt selon la revendication 8.

Selon des modes particuliers de réalisation, le procédé peut comprendre l'une ou plusieurs des caractéristiques suivantes, prise(s) isolément ou selon toutes les combinaisons techniquement possibles :
à l'étape b) ladite au moins une résine de synthèse est formulée à partir d'au moins un polymère ou au moins un copolymère pris dans la liste consistant en les polymères ou copolymères acrylique, styrène acrylique, halogénures de vinyle tels que chlorure de vinyle, chlorure de vinyle acrylate, halogénures de vinylidène tels que chlorure de vinylidène, vinyliques, méthacrylique, acétate polyvinylique, et leurs mélanges ;
l'étape b) de dépôt de la seconde couche est réalisée par pistolet, et/ou à la brosse ou au rouleau, de manière à ce que la seconde couche ait une épaisseur comprise entre 60 µm et 150 µm à sec ;
l'étape b) de dépôt de la seconde couche est réalisée de manière à ce que la seconde couche ait une densité surfacique à sec comprise entre 120 g/m<2> et 350 g/m<2> ;
l'étape b) de dépôt de la seconde couche est au moins en partie réalisée par pistolet sans air comprimé, l'application réalisée au pistolet se faisant sur une surface ayant une température comprise entre 35°C et 60°C ; à l'étape b), ladite surface est portée à la température comprise entre 35°C et 60°C par immersion d'au moins une partie de l'élément de tuyauterie dans de l'eau contenant de préférence un agent de conversion de surface pour recouvrir la première couche d'un film d'alliage superficiellement transformé, l'agent de conversion étant adapté pour le contact avec des eaux destinées à la consommation humaine ;
ladite au moins une résine de synthèse est formulée à partir d'au moins un polymère ou au moins un copolymère pris dans la liste consistant en les polymères ou copolymères acrylique, styrène acrylique, halogénures de vinyle tels que chlorure de vinyle, chlorure de vinyle acrylate, halogénures de vinylidène tels que chlorure de vinylidène, vinyliques, méthacrylique, acétate polyvinylique, et leurs mélanges ;
à l'étape a), la première couche est déposée par projection thermique, de préférence par arc électrique ;
à l'étape b), la seconde couche est dépourvue de solvant organique, notamment de solvant dérivé des hydrocarbures, et dépourvue de bisphénol ; et
à l'étape b), la seconde couche comprend un ou plusieurs principes actifs aptes à entrer en contact avec des eaux destinées à la consommation humaine et à avoir une action bactéricide et/ou passivante ;
l'étape b) de dépôt de la seconde couche est réalisée par pistolet avec air comprimé ;
l'étape b) de dépôt de la seconde couche est réalisée par pistolet sans air comprimé.

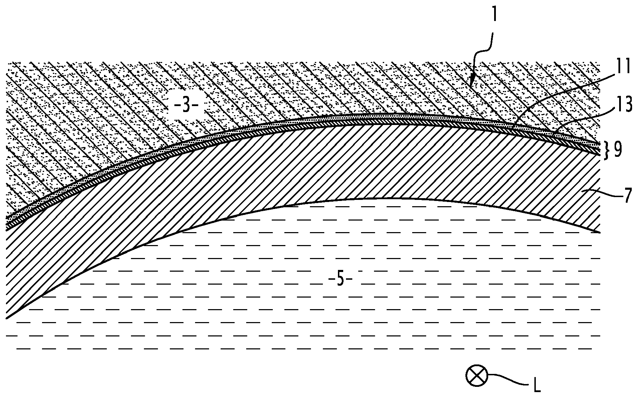

L'invention sera mieux comprise à la lecture de la description qui va suivre, donnée uniquement à titre d'exemple, et faite en se référant à la figure unique, qui est une vue schématique et partielle d'une section transversale d'un élément de tuyauterie selon l'invention.

Sur la figure est représenté un élément de tuyauterie revêtu 1 enterré dans un sol 3 et servant à transporter un fluide 5, par exemple de l'eau potable.

L'élément de tuyauterie revêtu 1 comprend un élément de tuyauterie 7 et un revêtement extérieur 9 situé entre le sol 3 et l'élément de tuyauterie 7, avantageusement réparti sur l'élément de tuyauterie 7 de manière à l'isoler du sol 3.

L'élément de tuyauterie 7 est à base de fer, avantageusement en fonte ductile. L'élément de tuyauterie 7 est par exemple un tuyau. Dans l'exemple représenté, il s'étend selon une direction longitudinale L perpendiculaire au plan de la figure. Seule une portion de la section de l'élément de tuyauterie 7 est représentée sur la figure, le reste de la section pouvant s'extrapoler sans difficulté à partir de la portion représentée.

Le fluide 5 circule à l'intérieur de l'élément de tuyauterie 7 selon la direction longitudinale L. Un revêtement intérieur, non représenté, peut exister sur une paroi interne de l'élément de tuyauterie 7, pour isoler le fluide 5 de l'élément de tuyauterie 7.

Le revêtement extérieur 9 comprend une première couche 11 et une seconde couche 13 disposée sur la première couche 11.

La première couche 11 est poreuse et avantageusement déposée par métallisation à l'arc électrique. La première couche 11 comprend un alliage ou pseudo-alliage de zinc. L'alliage ou pseudo-alliage comprend, en proportion massique, au moins 50% de zinc, et entre 0,5% et 40% d'aluminium. Par exemple, la première couche 11 comprend 85% de zinc et 15% d'aluminium en proportions massiques.

Sous l'action des agents corrosifs du sol, la première couche 11 se transforme en une couche protectrice de produits de corrosion stable dans le milieu où elle a pris naissance. La couche d'alliage zinc/aluminium est par ailleurs dite "anodique" par rapport à la fonte, en ce sens qu'elle peut se transformer progressivement par oxydation sous l'effet de la pile électrochimique formée par la fonte, l'alliage et le sol, pour protéger la fonte sous-jacente ou mise à nu au niveau de défauts de la couche d'alliage, par formation de ladite couche protectrice.

Du fait de son dépôt par métallisation à l'arc, la première couche 11 est constituée de gouttelettes solidifiées et est donc poreuse. Par une adaptation des réglages du procédé de métallisation gouvernant la taille des pores et de l'épaisseur de la couche, l'homme du métier est capable de régler les conditions, notamment la vitesse, de formation de la couche protectrice. Il a été constaté que la structure biphasique de l'alliage zinc/aluminium favorise le piégeage des produits de transformation du zinc.

La première couche 11 comprend également du magnésium, et/ou du cuivre, et/ou de l'argent, avec des teneurs massiques comprises entre 0,5% et 3%. Ces éléments sont par exemple ajoutés sous forme élémentaire, ou d'oxydes.

La première couche 11 présente une densité surfacique d'au moins 200 g/m<2>, de préférence au moins 350 g/m<2>, par exemple environ 400 g/m<2>. Avantageusement, la première couche 11 est déposée par projection thermique, pour obtenir les densités surfaciques précitées.

La seconde couche 13 est une peinture en phase aqueuse (avant séchage), également dite « hydrodiluable ». La seconde couche 13 est poreuse et permet d'assurer le bon fonctionnement de la protection galvanique apportée par la première couche 11, d'une part par son aptitude à boucher des pores de la première couche 11 et d'autre part par sa porosité qui permet de réguler la vitesse des réactions électrochimiques au voisinage de la première couche 11.

La peinture est monocomposante en phase aqueuse. La peinture comporte au moins une résine de synthèse émulsionnée et formulée à partir de polymères ou copolymères tels que, par exemple, acrylique, styrène acrylique, chlorure de vinyle, chlorure de vinyle acrylate, chlorure de vinylidène, vinyliques, méthacrylique, acétate polyvinylique.

La seconde couche 13 et la peinture sont avantageusement dépourvues de solvant ou co-solvant organique, notamment dérivé des hydrocarbures, et dépourvues de bisphénol.

La peinture est par exemple formulée à partir de composés appartenant aux listes positives de l'Union Européenne pour le contact avec les denrées alimentaires (règlement européen UE n° 10 / 2011) et disposant, à la date de dépôt de la présente demande de brevet, des agréments réglementaires (par exemple une Attestation de Conformité Sanitaire française (ACS), ou un certificat WRAS anglais) pour les produits placés au contact des eaux destinées à la consommation humaine.

La seconde couche 13 comprend avantageusement un ou plusieurs principes actifs aptes à entrer en contact avec des eaux destinées à la consommation humaine, par exemple des agents bactéricides et/ou passivants (par exemple argent, cuivre, oxydes de cuivre, phosphate de zinc, oxyde de zinc). L'agent bactéricide est par exemple un sel de cuivre apte à restreindre l'activité des bactéries du sol 3. Les principes actifs bactéricides sont avantageusement à migration très lente (eau, sol) une fois l'émulsion coalescée. Les particules solides des agents bactéricides sont alors encapsulées par la résine : la diffusion de l'eau du milieu extérieur au travers de la résine conduit à l'ionisation de ces agents qui ultérieurement, par diffusion lente, seront relâchés dans le milieu extérieur.

On va maintenant décrire un procédé pour déposer le revêtement extérieur 9 sur l'élément de tuyauterie 7. Le procédé comprend une étape a) de dépôt sur l'élément de tuyauterie 7 de la première couche 11 telle que décrite ci-dessus, et une étape b) de dépôt sur la première couche 11 d'une seconde couche 13 telle que décrite ci-dessus.

A l'étape a), la première couche 11 est avantageusement déposée par projection thermique, de préférence par arc électrique.

On dépose une quantité de matière suffisante pour obtenir une densité surfacique de la première couche 11 d'au moins 200 g/m<2>, de préférence d'au moins 350 g/m<2>. La projection se fait par exemple à partir de fils massifs ou de fils fourrés selon la disponibilité du zinc allié.

A l'étape b), la seconde couche 13 est avantageusement déposée sur la première couche 11 alors que cette dernière n'est pas recouverte d'efflorescences blanches, c'est-à-dire avec un différé de temps réduit entre le dépôt de la seconde couche 13 et de la première couche 11.

A l'étape b), la seconde couche 13 est déposée avantageusement par pistolet sans air comprimé, en particulier pour les grandes surfaces, et/ou à la brosse, en particulier pour les petites surfaces ou les retouches, de telle manière que la seconde couche 13 ait une épaisseur avantageusement comprise entre 60 µm et 150 µm à sec, par exemple une épaisseur d'environ 120 µm à sec. La seconde couche 13 présente avantageusement une densité surfacique à sec comprise entre 120 g/m<2> et 350 g/m<2>, par exemple une densité surfacique à sec de 250 g/m<2>.

Le dépôt de la seconde couche 13 est avantageusement au moins en partie réalisé par pistolet sans air comprimé, l'application réalisée au pistolet se faisant sur une surface ayant une température comprise entre 35°C et 60°C. Cette surface est portée à ladite température par exemple en immergeant au moins une partie de l'élément de tuyauterie 7 revêtu de la première couche 11 dans un bac d'eau à cette température.

L'eau contient avantageusement un agent de conversion de surface, par exemple phosphate de zinc, oxyde de zinc, pour recouvrir la première couche 11 d'un film d'alliage superficiellement transformé. L'agent de conversion de surface adapté à du zinc allié dispose avantageusement des agréments réglementaires pour le contact avec les eaux destinées à la consommation humaine.

Le mouillage de la première couche 11 par de l'eau contenant le principe actif conduit à recouvrir la surface de la première couche 11 d'un film d'alliage superficiellement transformé en, par exemple, hydroxyde et oxyde de zinc, ou phosphate de zinc, aptes à retarder l'oxydation ultérieure de la première couche 11 une fois l'élément de tuyauterie 1 soumis à son environnement de service, et favorables à une augmentation de la durée de la protection.

### Exemple de revêtement non conforme à l'invention :

Revêtement extérieur 9 sur tuyau 7 en fonte ductile, composé d'une première couche 11 métallisée déposée par arc électrique, de 400 g/m<2>d'alliage zinc-aluminium à 15% d'aluminium, et d'une seconde couche 13 constituée d'une peinture monocomposant en phase aqueuse, la seconde couche 13 ayant une épaisseur de 120 µm à sec et une densité surfacique à sec de 250 g/m<2>.

La peinture est une émulsion à base de copolymère acrylique-PVDC et a été appliquée après immersion du tuyau 7 revêtu de la première couche 11 dans un bac d'eau à 60 °C contenant un polyphosphate de zinc pour créer un film superficiel de quelques microns à la surface de la première couche 11.

L'émulsion de copolymère à base copolymère acrylique-PVDC comporte un principe actif, par exemple un sel de cuivre, en vue de restreindre l'activité des bactéries du sol 3 au niveau du revêtement extérieur 9.

Grâce aux caractéristiques de la première couche 11 et de la seconde couche 13 décrites ci-dessus, le revêtement extérieur 9 assure une protection anticorrosion encore plus efficace de l'élément de tuyauterie 7, en particulier en sol 3 corrosif, avec des propriétés sanitaires et environnementales améliorées. En effet, la seconde couche 13 bouche très efficacement les pores de la première couche 11. L'association de la seconde couche 13 sur la première couche 11 favorise l'amorce d'une conversion de la surface de gouttelettes métalliques constituant la première couche 11. En outre, le revêtement extérieur 9, de par sa constitution et son procédé d'application, est d'un coût très compétitif.

La caractéristique optionnelle selon laquelle la surface de la première couche 11 est portée à la température comprise entre 35°C et60°C par immersion d'au moins une partie de l'élément de tuyauterie 7 revêtu de la première couche 11 dans de l'eau contenant de préférence un agent de conversion de surface, favorise l'apparition d'un film d'alliage superficiellement transformé.

En outre, la caractéristique optionnelle selon laquelle la seconde couche 13 est dépourvue de solvant ou de co-solvant organiques, notamment de solvant ou de co-solvant dérivés des hydrocarbures, présente l'avantage que le revêtement extérieur 9 est compatible avec les exigences règlementaires actuelles liées au contact avec les eaux destinées à la consommation humaine.

De plus l'absence de bisphénol dans la formulation des résines sélectionnées supprime le risque potentiel de toxicité pour l'homme associé à cette molécule.

Ceci facilite les opérations de revêtement de l'élément de tuyauterie 7. Il est en effet possible de déposer le même revêtement 9 sur des zones destinées à être uniquement en contact avec le sol 3 corrosif et sur des zones, telles qu'une extrémité de tuyau ou une zone de découpe, pouvant se trouver au contact de l'eau 5 destinée à la consommation humaine.

Par ailleurs, l'impact environnemental est fortement réduit par la suppression des émissions de solvants organiques volatils, ou « COV ». Les conditions de sécurité des opérateurs qui fabriquent ou posent l'élément de tuyauterie 1 sont améliorées. Le traitement et l'élimination des déchets liés à l'élément de tuyauterie 1 est réalisable par des installations conventionnelles de recyclage des peintures.

Grâce à la caractéristique optionnelle selon laquelle la seconde couche 13 comprend un ou plusieurs principes actifs aptes à avoir une action bactéricide et/ou passivante, la résistance à long terme du revêtement 9 est améliorée dans tous les sols.

## Revendications

1. Revêtement extérieur (9) pour élément de tuyauterie (7) enterré et à base de fer, notamment en fonte, le revêtement extérieur (9) comprenant une première couche (11) poreuse et une seconde couche (13) poreuse disposée sur la première couche (11) et apte à boucher des pores de la première couche (11), le revêtement extérieur (9) étant **caractérisé en ce que** :
- la première couche (11) comprend un alliage ou pseudo-alliage de zinc, l'alliage ou pseudo-alliage comprenant, en proportion massique, au moins 50% de zinc, et de préférence entre 0,5% et 40% d'aluminium,
- la première couche (11) comprend du magnésium à une concentration massique comprise entre 0.5% et 3%. et/ou du cuivre à une concentration massique comprise entre 0.5% et 3%, et/ou de l'argent à une concentration massique comprise entre 0.5% et 3%, et
- la seconde couche (13) comprend une peinture monocomposante en phase aqueuse à base d'au moins une résine de synthèse émulsionnée, dispersée ou dissoute dans l'eau.

2. Revêtement extérieur (9) selon la revendication 1, **caractérisé en ce que** ladite au moins résine de synthèse est formulée à partir d'au moins un polymère ou au moins un copolymère pris dans la liste consistant en les polymères ou copolymères acrylique, styrène acrylique, halogénures de vinyle tels que chlorure de vinyle, chlorure de vinyle acrylate, halogénures de vinylidène tels que chlorure de vinylidène, vinyliques, méthacrylique, acétate polyvinylique, et leurs mélanges.

3. Revêtement extérieur (9) selon la revendications 1 ou 2, dans lequel la première couche (11) présente une densité surfacique d'au moins 200 g/m², de préférence au moins 350 g/m².

4. Revêtement extérieur (9) selon l'une quelconque des revendications 1 à 3, dans lequel la seconde couche (13) est dépourvue de solvant ou de co-solvant organiques, notamment de solvant ou de co-solvant dérivés des hydrocarbures, et dépourvue de bisphénol.

5. Revêtement extérieur (9) selon l'une quelconque des revendications 1 à 4, dans lequel la seconde couche (13) comprend un ou plusieurs principes actifs aptes à entrer en contact avec des eaux destinées à la consommation humaine et à avoir une action bactéricide et/ou passivante.

6. Revêtement extérieur (9) selon l'une quelconque des revendications 1 à 5, dans lequel la seconde couche (13) présente une densité surfacique à sec comprise entre 120 g/m² et 350 g/m².

7. Elément de tuyauterie revêtu (1), à base de fer, notamment en fonte, destiné à être enterré, et **caractérisé en ce qu'**il comprend un revêtement extérieur (9) selon l'une quelconque des revendications précédentes.

8. Procédé de dépôt d'un revêtement extérieur (9) sur un élément de tuyauterie (7) à base de fer, notamment en fonte, destiné à être enterré, le procédé étant **caractérisé en ce qu'**il comprend les étapes suivantes :
a) dépôt par métallisation, de préférence à l'arc électrique, sur l'élément de tuyauterie (7) d'une première couche (11) poreuse comprenant un alliage ou pseudo-alliage de zinc, l'alliage ou pseudo-alliage comprenant, en proportion massique, au moins 50% de zinc, et de préférence entre 0,5% et 40% d'aluminium, la première couche (11) comprenant du magnésium à une concentration massique comprise entre 0,5% et 3%, et/ou du cuivre à une concentration massique comprise entre 0,5% et 3%, et/ou de l'argent à une concentration massique comprise entre 0,5% et 3%, et
b) dépôt sur la première couche (11), non recouverte d'efflorescences blanches, d'une seconde couche (13) poreuse comprenant une peinture monocomposante en phase aqueuse, à base d'au moins une résine de synthèse émulsionnée, dispersée ou dissoute dans l'eau.

9. Procédé selon la revendication 8, dans lequel, à l'étape b) ladite au moins une résine de synthèse est formulée à partir d'au moins un polymère ou au moins un copolymère pris dans la liste consistant en les polymères ou copolymères acrylique, styrène acrylique, halogénures de vinyle tels que chlorure de vinyle, chlorure de vinyle acrylate, halogénures de vinylidène tels que chlorure de vinylidène, vinyliques, méthacrylique, acétate polyvinylique, et leurs mélanges.

10. Procédé selon la revendication 8 ou 9, dans lequel l'étape b) de dépôt de la seconde couche (13) est réalisée par pistolet, et/ou à la brosse ou au rouleau, de manière à ce que la seconde couche (13) ait une épaisseur comprise entre 60 µm et 150 µm à sec.

11. Procédé selon l'une quelconque des revendications 8 à 10, dans lequel l'étape b) de dépôt de la seconde couche (13) est réalisée de manière à ce que la seconde couche (13) ait une densité surfacique à sec comprise entre 120 g/m² et 350 g/m².

12. Procédé selon l'une quelconque des revendications 8 à 11, dans lequel l'étape b) de dépôt de la seconde couche (13) est au moins en partie réalisée par pistolet sans air comprimé, l'application réalisée au pistolet se faisant sur une surface ayant une température comprise entre 35°C et 60°C.

13. Procédé selon la revendication 12, dans lequel, à l'étape b), ladite surface est portée à la température comprise entre 35°C et 60°C par immersion d'au moins une partie de l'élément de tuyauterie dans de l'eau contenant de préférence un agent de conversion de surface pour recouvrir la première couche (11) d'un film d'alliage superficiellement transformé, l'agent de conversion étant adapté pour le contact avec des eaux destinées à la consommation humaine.

## Patentansprüche

1. Äußere Beschichtung (9) für ein unterirdisches Rohrleitungselement (7) und aus Eisen, insbesondere aus Gusseisen, wobei die äußere Beschichtung (9) eine poröse erste Schicht (11) und eine poröse zweite Schicht (13), die auf der ersten Schicht (11) angebracht und geeignet ist, Poren der ersten Schicht (11) zu verschließen, umfasst, wobei die äußere Beschichtung (9) **dadurch gekennzeichnet ist, dass**:
- die erste Schicht (11) eine Legierung oder Pseudolegierung aus Zink umfasst, wobei die Legierung oder Pseudolegierung einen Massenanteil von mindestens 50 % Zink, und vorzugsweise zwischen 0,5 % und 40 % Aluminium, enthält,
- die erste Schicht (11) Magnesium in einer Massenkonzentration zwischen 0,5 % und 3 %, und/oder Kupfer in einer Massenkonzentration zwischen 0,5 % und 3 %, und/oder Silber in einer Massenkonzentration zwischen 0,5 % und 3 % enthält, und
- die zweite Schicht (13) eine Einkomponentenfarbe in wässriger Phase auf Basis von mindestens einem in Wasser emulgierten, dispergierten oder gelösten Kunstharz umfasst.

2. Äußere Beschichtung (9) nach Anspruch 1, **dadurch gekennzeichnet, dass** der besagte mindestens eine Kunstharz aus mindestens einem Polymer oder mindestens einem Copolymer aus der Liste formuliert ist, bestehend aus Akryl-, Styrol-Akryl-Polymeren oder -Copolymeren, Vinylhalogeniden wie Vinylchlorid, Vinylacrylatchlorid, Vinylidenhalogeniden wie Vinylidenchlorid, Vinyl, Methacrylat, Polyvinylacetat und ihren Gemischen.

3. Äußere Beschichtung (9) nach einem der Ansprüche 1 oder 2, in welcher die erste Schicht (11) eine Oberflächendichte von mindestens 200 g/m² aufweist, vorzugsweise von mindestens 350 g/m².

4. Äußere Beschichtung (9) nach einem der Ansprüche 1 bis 3, in welcher die zweite Schicht (13) frei von organischen Lösungsmitteln oder Zusatzlösungsmitteln ist, insbesondere von Lösungsmitteln oder Zusatzlösungsmitteln, die Derivate von Kohlenwasserstoffen sind, und frei von Bisphenol.

5. Äußere Beschichtung (9) nach einem der Ansprüche 1 bis 4, in welcher die zweite Schicht (13) einen oder mehrere Wirkstoffe enthält, die geeignet sind, mit für den menschlichen Verzehr bestimmtem Wasser in Berührung zu kommen und eine bakterizide und/oder passivierende Wirkung zu haben.

6. Äußere Beschichtung (9) nach einem der Ansprüche 1 bis 5, in welcher die zweite Schicht (13) eine trockene Oberflächendichte zwischen 120 g/m² und 350 g/m² aufweist.

7. Beschichtetes Rohrleitungselement (1) aus Eisen, insbesondere aus Gusseisen, das für das unterirdische Verlegen bestimmt ist, und **dadurch gekennzeichnet, dass** es eine äußere Beschichtung (9) nach einem der vorstehenden Ansprüche umfasst.

8. Verfahren zum Aufbringen einer äußeren Beschichtung (9) auf ein Rohrleitungselement (7) aus Eisen, insbesondere aus Gusseisen, das für das unterirdische Verlegen bestimmt ist, wobei das Verfahren dadurch charakterisiert ist, dass es die folgenden Schritte umfasst:
a) Aufbringen durch Metallisieren, vorzugsweise mit Lichtbogen, auf ein Rohrleitungselement (7) einer porösen ersten Schicht (11), die einer Legierung oder Pseudolegierung aus Zink umfasst, wobei die Legierung oder Pseudolegierung einen Massenanteil von mindestens 50 % Zink, und vorzugsweise zwischen 0,5 % und 40 % Aluminium, enthält, wobei die erste Schicht (11) Magnesium in einer Massenkonzentration zwischen 0,5 % und 3 %, und/oder Kupfer in einer Massenkonzentration zwischen 0,5 % und 3 %, und/oder Silber in einer Massenkonzentration zwischen 0,5 % und 3 % enthält, und
b) Aufbringen auf der ersten Schicht (11), die nicht von weißen Ausblühungen bedeckt ist, einer porösen zweiten Schicht (13), die eine Einkomponentenfarbe in wässriger Phase, auf Basis von mindestens einem in Wasser emulgierten, dispergierten oder gelösten Kunstharz, umfasst.

9. Verfahren nach Anspruch 8, in welchem im Schritt b) der besagte mindestens eine Kunstharz aus mindestens einem Polymer oder mindestens einem Copolymer aus der Liste formuliert ist, bestehend aus Akryl-, Styrol-Akryl-Polymeren oder - Copolymeren, Vinylhalogeniden wie Vinylchlorid, Vinylacrylatchlorid, Vinylidenhalogeniden wie Vinylidenchlorid, Vinyl, Methacrylat, Polyvinylacetat und ihren Gemischen.

10. Verfahren nach Anspruch 8 oder 9, in welchem der Schritt b) zum Aufbringen der zweiten Schicht (13) durch Pistole und/oder Pinsel oder Rolle ausgeführt wird, dergestalt, dass die zweite Schicht (13) eine Trockendicke zwischen 60 µm und 150 µm hat.

11. Verfahren nach einem der Ansprüche 8 bis 10, in welchem der Schritt b) zum Aufbringen der zweiten Schicht (13) dergestalt ausgeführt wird, dass die zweite Schicht (13) eine trockene Oberflächendichte zwischen 120 g/m² und 350 g/m² hat.

12. Verfahren nach einem der Ansprüche 8 bis 11, in welchem der Schritt b) zum Aufbringen der zweiten Schicht (13) mindestens teilweise durch Pistole ohne Druckluft ausgeführt wird, wobei das mit der Pistole ausgeführte Auftragen auf einer Oberfläche erfolgt, die eine Temperatur zwischen 35 °C und 60 °C hat.

13. Verfahren nach Anspruch 12, in welchem im Schritt b) die besagte Oberfläche auf eine Temperatur zwischen 35 °C und 60 °C gebracht wird, durch Eintauchen von mindestens einem Teil des Rohrleitungselements in das Wasser, das vorzugsweise ein Oberflächenkonvertierungsmittel enthält, um die erste Schicht (11) mit einem oberflächlich umgewandelten Legierungsfilm zu überziehen, wobei das Konvertierungsmittel geeignet ist, um mit für den menschlichen Verzehr bestimmtem Wasser in Berührung zu kommen.

## Claims

1. An outer coating (9) for an underground piping element (7) made from iron, in particular cast iron, the outer coating (9) having a first porous layer (11) and a second porous layer (13) positioned on the first layer (11) and able to plug the pores of the first layer (11), the outer coating (9) being **characterized in that**:
- the first layer (11) includes a zinc alloy or pseudo-alloy, the alloy or pseudo-alloy including, in terms of mass, at least 50% zinc, and preferably between 0.5% and 40% aluminum,
- the first layer (11) includes magnesium at a mass concentration of between 0.5% and 3%, and/or copper at a mass concentration of between 0.5% and 3%, and/or silver at a mass concentration of between 0.5% and 3%, and
- the second layer (13) comprises a one-component paint in the aqueous phase made from at least one synthetic resin emulsified, dispersed or dissolved in water.

2. The outer coating (9) according to claim 1, **characterized in that** said at least one synthetic resin is formulated from at least one polymer or at least one copolymer chosen from the list consisting of acrylic, styrene acrylic, vinyl halide such as vinyl chloride, polyvinyl chloride acrylate, vinylidene halide such as vinylidene chloride, vinyl, methacrylate, polyvinyl acetate polymers or copolymers, and mixtures thereof.

3. The outer coating (9) according to any one of claims 1 or 2, wherein the first layer (11) has a surface density of at least 200 g/m², preferably at least 350 g/m², for example approximately 350 g/m².

4. The outer coating (9) according to any one of claims 1 to 3, wherein the second layer (13) has no organic solvent or co-solvent, in particular solvent or co-solvent derived from hydrocarbons, and without bisphenol.

5. The outer coating (9) according to any one of claims 1 to 4, wherein the second layer (13) includes one or more active ingredients able to come into contact with water intended for human consumption and have a bactericidal and/or passivating action.

6. The outer coating (9) according to any one of claims 1 to 5, wherein the second layer (13) has a dry surface density comprised between 120 g/m² and 350 g/m².

7. A coated piping element (1), made from iron, in particular cast iron, designed to be placed underground, including an outer coating (9) according to any one of the preceding claims.

8. A method for depositing an outer coating (9) on a piping element (7) made from iron, in particular cast iron, designed to be placed underground, **characterized in that** it includes the following steps:
a) deposition by metallization, preferably by electric arc, on the piping element (7) of a first porous layer (11) including a zinc alloy or pseudo-alloy, the alloy or pseudo-alloy including, in terms of mass, at least 50% zinc, and preferably between 0.5% and 40% aluminum, the first layer (11) including magnesium at a mass concentration of between 0.5% and 3%, and/or copper at a mass concentration of between 0.5% and 3%, and/or silver at a mass concentration of between 0.5% and 3%, and
b) deposition on the first layer (11), not covered with white efflorescence, of a second porous layer (13) including a one-component paint in aqueous phase, made from at least one synthetic resin emulsified, dispersed or dissolved in the water.

9. The method according to claim 8, wherein, in step b), said at least one synthetic resin is formulated from at least one polymer or at least one copolymer chosen from the list consisting of acrylic, styrene acrylic, vinyl halide such as vinyl chloride, polyvinyl chloride acrylate, vinylidene halide such as vinylidene chloride, vinyl, methacrylate, polyvinyl acetate polymers or copolymers, and mixtures thereof.

10. The method according to claim 8 or 9, wherein step b) for depositing the second layer (13) is done by gun, and/or with a brush or roller, such that the second layer (13) has a dry thickness comprised between 60 µm and 150 µm.

11. The method according to any one of claims 8 to 11, wherein step b) for depositing the second layer (13) is done such that the second layer (13) has a dry surface density comprised between 120 g/m² and 350 g/m².

12. The method according to any one of claims 8 to 11, wherein step b) for depositing the second layer (13) is at least partially done by gun with no compressed air, the application by gun being done on a surface having a temperature comprised between 35°C and 60°C.

13. The method according to claim 12, wherein, in step b), said surface is brought to the temperature comprised between 35°C and 60°C by immersing at least part of the piping element in water preferably containing a surface conversion agent to cover the first layer (11) with a superficially transformed alloy film, the conversion agent being suitable for contact with water intended for human consumption.
